# EUROPÄISCHE PATENTSCHRIFT

(11) **EP 2 266 374 B1**
(45) Veröffentlichungstag und Bekanntmachung des Hinweises auf die Patenterteilung: **23.04.2014**
(21) Anmeldenummer: 09723617.8
(22) Anmeldetag: 16.03.2009
(51) Int. Cl.: H05B 41/288

(54) **LEISTUNGSREGELUNG VON GASENTLADUNGSLAMPEN IN HALBBRÜCKEN- UND VOLLBRÜCKENSCHALTUNGEN**
POWER REGULATION OF GAS DISCHARGE LAMPS IN HALF BRIDGE AND FULL BRIDGE CIRCUITS
RÉGULATION DE PUISSANCE DE LAMPES À DÉCHARGE DANS DES CIRCUITS EN DEMI-PONT OU EN PONT INTÉGRAL

(30) Priorität: 31.03.2008 DE 102008016757; 18.03.2008 DE 102008014694
(43) Veröffentlichungstag der Anmeldung: 29.12.2010
(73) Patentinhaber: Tridonic GmbH & Co KG, 6851 Dornbirn (AT); Tridonic AG, 8755 Ennenda (CH)
(72) Erfinder: HUBER, Martin, CH-8854 Siebnen (CH); JELACA, Nebosja, 8010 Graz (AT); MARENT, Günter, A-6780 Bartholomäberg (AT); PEREIRA, Eduardo, CH-8854 Siebnen (CH)
(74) Vertreter: Rupp, Christian
(86) Internationale Anmeldenummer: PCT/EP2009/001892
(87) Internationale Veröffentlichungsnummer: WO 2009/115260

(56) Entgegenhaltungen:
- EP-A- 1 114 571
- EP-A- 1 696 713
- WO-A-2006/056918
- DE-A1- 10 200 004
- US-A1- 2004 183 463

## Beschreibung

Die vorliegende Erfindung betrifft eine Schaltungsanordnung zum Betreiben von Gasentladungslampen, insbesondere von Hochdruck-Gasentladungslampen oder Fluoreszenzlampen, welche in elektronischen Vorschaltgeräten für entsprechende Gasentladungslampen zum Einsatz kommt.

Die Erfindung bezieht sich auch auf ein Beleuchtungssystem.

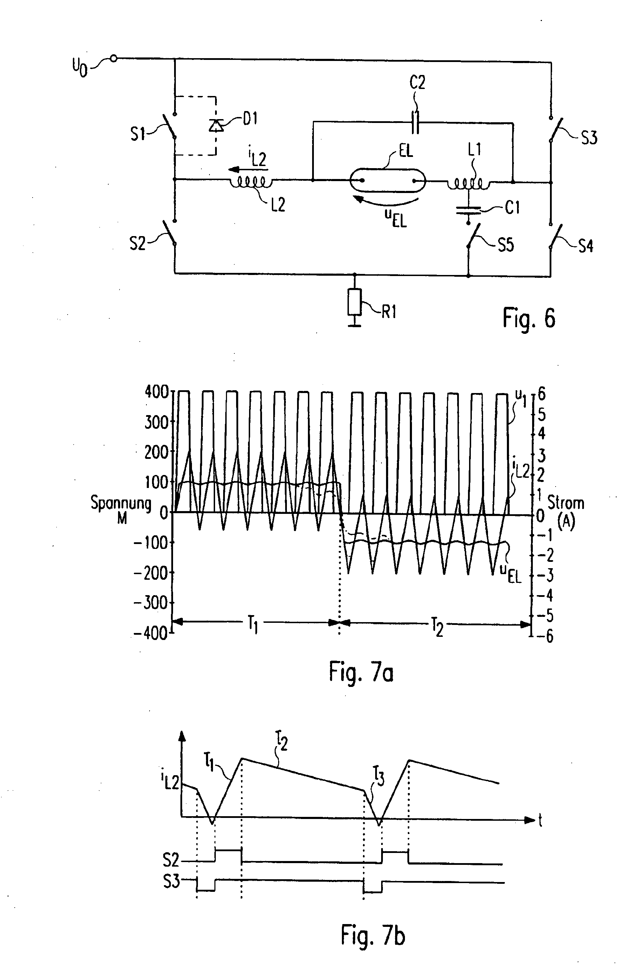

Aus der EP 1114571B1 ist die in Fig. 6 gezeigte Schaltungsanordnung bekannt, die vier steuerbare Schalter S1-S4 aufweist, die zu einer Vollbrücke verschaltet sind. Ähnliche Schaltungsanordnungen sind aus den Druckschrifte EP 1 696 713 A2 und DE 102 00 004 A1 bekannt. An die Vollbrücke ist eine Gleichspannung Uo angelegt, die von einer geeigneten Gleichspannungsquelle des entsprechenden elektronischen Vorschaltgeräts, in dem die Schaltungsanordnung verwendet wird, stammt. Zu den 5 Schaltern S1 - S4 sind jeweils Freilaufdioden parallel geschaltet, wobei der Einfachheit halber in Fig. 6 lediglich die dem Schalter S1 parallel geschaltete Freilaufdiode D1 dargestellt ist. Als Schalter S1-S4 werden vorzugsweise Feldeffekttransistoren verwendet, die die Freilaufdioden bereits enthalten. In dem Brückenzweig der in Fig. 6 gezeigten Vollbrückenschaltung ist eine anzusteuernde Gasentladungslampe EL, insbesondere eine Hochdruck-Gasentladungslampe, angeordnet. Die in Fig. 6 gezeigte Schaltungsanordnung ist insbesondere für den Betrieb von Metallhalogen-Hochdruck-Gasentladungslampen geeignet, die besonders hohe Zündspannungen benötigen. Wie bereits eingangs erwähnt worden ist, unterscheiden sich Hochdruck-Gasentladungslampen von Niederdruck-Gasentladungslampen insbesondere dadurch, daß sie höhere Zündspannungen benötigen und in ihrem kleineren Lampenkörper ein höherer Druck auftritt. Desweiteren weisen Hochdruck-Gasentladungslampen eine höhere Leuchtdichte auf, wobei sich jedoch die Farbtemperatur der jeweiligen Hochdruck-Gasentladungslampe mit der zugeführten Leistung ändert. Elektronische Vorschaltgeräte für Hochdruck-Gaseritladungslampen sollten daher einerseits hohe Zündspannungen bereitstellen und andererseits eine Konstanthaltung der zugeführten Leistung ermöglichen.

Mit dem Brückenzweig der in Fig. 6 dargestellten Vollbrücke ist ein Serienresonanzkreis gekoppelt, der eine Induktivität L1 und eine Kapazität C1 umfaßt, wobei die Kapazität C1 an einen Anzapfungspunkt der Induktivität L1 angreift und über einen weiteren steuerbaren Schalter S5 parallel zu dem Schalter S4 geschaltet ist. Darüber hinaus ist eine Glättungs- oder Filterschaltung vorgesehen, die eine weitere Induktivität L2 und eine weitere Kapazität C2 aufweist, wobei diese Bauelemente wie in Fig. 6 gezeigt verschaltet sind. An die Vollbrücke ist zudem ein Widerstand R1 angeschlossen, der als Strommeß- oder Shunt-Widerstand dient.

Der zuvor erwähnte Serienresonanzkreis mit der Induktivität L1 und der Kapazität C1 dient in Kombination mit der weiteren Kapazität C2 insbesondere zum Zünden der 35 Gasentladungslampe EL. Zu diesem Zweck wird der Serienresonanzkreis in Resonanz angeregt, d.h. eine der Resonanzfrequenz entsprechende Frequenz der Lampe zugeführt. Die Anregung des Resonanzkreises erfolgt durch abwechselndes Schalten der Schalter S3 und S4. Dies soll nachfolgend näher erläutert werden.

Zum Zünden der Gasentladungslampe EL werden zwei unmittelbar in Serie geschaltete Schalter, beispielsweise die Schalter S1 und S2, mit Hilfe einer geeigneten Steuerschaltung geöffnet (oder aber hochfrequent getaktet) und der Schalter S5, der sich in Serie mit der Kapazität C1 befindet, geschlossen. Die anderen beiden Schalter, beispielsweise die Schalter S3 und S4, der Vollbrücke werden abwechselnd geöffnet und geschlossen, wobei dies mit einer relativ hohen Frequenz (ca. 150 kHz) erfolgt. Die beiden Schalter S1 und S2 werden, sofern sie bei der Zündung hochfrequent getaktet werden, immer jeweils synchron mit dem in einer Brückendiagonale gegenüberliegenden Schalter geöffnet und geschlossen.

Die Schaltfrequenz wird langsam in Richtung auf die Resonanzfrequenz des durch die Induktivität L1 und die Kapazität C1 gebildeten Serienresonanzkreises abgesenkt. Die Zündspannung der Gasentladungslampe EL wird in der Regel bereits vor Erreichen der Resonanzfrequenz erreicht. In diesem Fall wird die Schaltfrequenz für die Schalter S3 und S4 auf dieser Frequenz gehalten bis die Lampe EL zündet. Die an der rechten Hälfte von L1 abfallende Spannung wird aufgrund des durch die Induktivität L1 realisierten Spartransformatorprinzips beispielsweise im Verhältnis 1:15 auf die linke Hälfte, die mit der Gasentladungslampe EL gekoppelt ist, hochtransformiert, wobei die an der linken Hälfte der Induktivität L1 auftretende Spannung die tatsächliche Zündspannung für die Gasentladungslampe EL bildet, die über die Kapazität C2 an die Lampe angelegt wird. Um das Zünden der Gasentladungslampe EL zu erfassen, wird die an dem Anzapfungspunkt der Induktivität L1 abfallende Spannung gemessen, welche proportional zur Zünd- bzw. Lampenspannung Uj:L ist, da nach dem. Zünden der Lampe EL diese dämpfend auf den Serienresonanzkreis einwirkt. Nach erfolgter Zündung der Gasentladungslampe EL wird der Schalter S5 für den nachfolgenden Normalbetrieb geöffnet.

Ergänzend ist zu bemerken, daß der Schalter S5 für die Funktionsfähigkeit der Schaltungsanordnung nicht unbedingt erforderlich ist. Vielmehr könnte der Schalter S5 auch nach erfolgter Zündung der Gasentladungslampe EL geschlossen bleiben oder grundsätzlich durch eine entsprechende Überbrückung ersetzt sein. Mit Hilfe des Schalters S5, der nach erfolgter Zündung der Gasentladungslampe EL geöffnet wird, ist jedoch ein saubererer Betrieb der Gasentladungslampe EL möglich. Des weiteren ist zu bemerken, daß die Zündspule L1 insbesondere derart ausgelegt ist, daß sie im nachfolgend noch näher erläuterten Normalbetrieb in der Sättigung arbeitet und somit den Rest der Schaltung nicht beeinflußt. Dies kann beispielsweise dadurch erreicht werden, daß als Zündspule L1 eine Spule mit einem Eisenkern verwendet wird, der im Normalbetrieb in der Sättigung betrieben wird, so daß die Spule L1 nach dem Zünden der Gasentladungslampe EL im Normalbetrieb lediglich eine vernachlässigbare Induktivität bildet. Im Normalbetrieb ist somit lediglich die ebenfalls im Brückenzweig vorgesehene Induktivität L2 strombegrenzend wirksam.

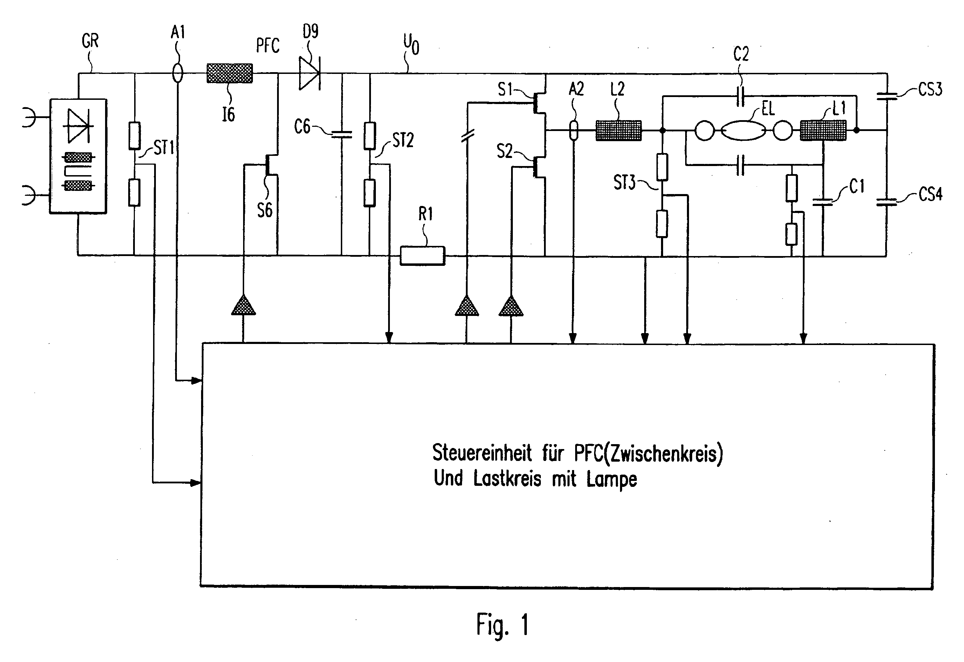

Nachfolgend soll der nach dem Zünden der Gasentladungslampe EL initiierte Normalbetrieb näher erläutert werden, wobei während des Normalbetriebs die erfindungsgemäße Schaltungsanordnung bzw. Vollbrücke in einem sog. Discontinuous-Modus betrieben wird. Prinzipiell wird die in Fig. 1 gezeigte Vollbrücke mit den steuerbaren Schaltern S1-S4 auf an sich bekannte Art und Weise während des Normalbetriebs betrieben, d.h. die beiden Brückendiagonalen mit den Schaltern S1 und S4 bzw. S2 und S3 werden abwechselnd aktiviert und deaktiviert und somit die entsprechenden Schalter der beiden Brückendiagonalen abwechselnd bzw. komplementär zueinander ein- und ausgeschaltet, wobei zudem bei Aktivierung der Brückendiagonale mit den Schaltern S1 und S4 der Schalter S1 hochfrequent abwechselnd ein- und ausgeschaltet wird, während entsprechend bei Aktivierung der Brückendiagonale mit den Schaltern S2 und S3 der steuerbare Schalter S2 hochfrequent abwechselnd ein- und ausgeschaltet wird. D.h. die Vollbrücke wird mit einer relativ niedrigen Frequenz, die insbesondere im Bereich 80 - 150 Hz liegen kann, umgepolt, während der Schalter S1 oder S2 der jeweils aktivierten Brückendiagonale zudem hochfrequent, beispielsweise mit einer Frequenz von ca. 45 kHz, abwechselnd ein- und ausgeschaltet wird. Dieses hochfrequente Ein- und Ausschalten der Schalter S1 oder S2 erfolgt mit Hilfe eines hochfrequenten pulsweitenmodulierten Steuersignals einer entsprechenden Steuerschaltung, welches mit Hilfe der aus den Bauelementen L2 und C2 bestehenden Filter- oder Glättungsschaltung gesiebt wird, so daß an der Gasentladungslampe EL lediglich der lineare Mittelwert des über den Brückenzweig fließenden Zweigstroms iL2 anliegt. Mit Hilfe des pulsweitenmodulierten Steuersignals kann die der Vollbrücke zugeführte Leistung konstant gehalten werden, was - wie eingangs erwähnt worden ist - insbesondere für den Betrieb von Hochdruck-Gasentladungslampen wichtig ist.

Der niederfrequente Anteil des der Gasentladungslampe E1 zugeführten Stroms wird durch Umschalten bzw. Umpolen der beiden Brückendiagonalen, d.h. durch Umschalten von S1 und S4 auf S2 und S3, erzeugt. Über den rechten Brückenzweig mit dem Schaltern S3 und S4 wird in diesem Fall die Lampe EL niederfrequent auf die Versorgungsspannung Uo oder auf Masse gelegt, so daß an den Anschlußklemmen der Lampe EL im wesentlichen lediglich der niederfrequente Anteil anliegt.

Gemäß dem zuvor erwähnten niederfrequenten Discontinuous-Modus wird der steuerbare Schalter S1 bzw. S2 der jeweils aktivierten Brückendiagonale zu einem Zeitpunkt geschlossen, wenn der über die Induktivität L2 fließende Zweigstrom iL2 wieder auf Null abgesunken ist, vorzugsweise wenn er sein Minimum erreicht hat. Mit "Minimum" wird dabei der untere Umkehrpunkt des Stroms iL2 verstanden, wobei dieses Minimum durchaus auch im leicht negativen Stromwertbereich liegen kann. "Geschlossen" bedeutet dabei, dass eine Steuereinheit in diesem zeitlichen Bereich den Schaltvorgang auslöst - das eigentliche Schliessen des Schalters, d.h. sein Erreichen des leitfähigen Zustands tritt üblicherweise erst ein, wenn der nach dem Minimum wieder ansteigende Strom etwa erneut eine (diesmal aufsteigenden) Nulldurchgang vollzieht. Die Überwachung, ob der durch die Induktivität L2 fließende Zweigstrom iL2 wieder auf Null abgesunken bzw. ob die Induktivität L2 entmagnetisiert ist, kann mittels einer Sekundärwicklung an der Induktivität L2 oder auch mittels einer Überwachung der Mittelpunktspannung zwischen den Schaltern S1 und S2 erfolgen.

Zur Betrachtung des Stromverlaufs soll nachfolgend davon ausgegangen werden, daß zunächst die Brückendiagonale mit 30 den Schaltern S2 und S3 aktiviert ist, während die Brückendiagonale mit den Schaltern S1 und S4 deaktiviert ist. D.h. die Schalter S2 und S3 sind geschlossen, während die Schalter S1 und S4 geöffnet sind. Zum Zeitpunkt des 5 Schließens der Schalter S2 und S3 beginnt durch die Induktivität L2 ein Strom iL2 zu fließen, der gemäß einer Exponentialfunktion ansteigt, wobei im hier interessierenden Bereich ein quasi-linearer Anstieg des Stroms iL2 zu erkennen ist, so daß nachfolgend der Einfachheit halber von einem linearen Anstieg bzw. Abfall des Stroms iI2 gesprochen wird. Durch Öffnen des Schalters S5 wird dieser Strom iL2 unterbrochen, wobei - wie bereits erwähnt worden ist - der Schalter S2 insbesondere hochfrequent und unabhängig vom Schaltzustand des Schalters 53 abwechselnd geöffnet und geschlossen wird. Das Öffnen des Schalters S2 hat zur Folge, daß der Strom i_{L2} zwar vorerst über die Freilaufdiode D1 des geöffneten Schalters S1 in die gleiche Richtung weiter fließt, aber kontinuierlich abnimmt und sogar schließlich einen negativen Wert erreichen kann.

Dies ist insbesondere solange der Fall bis die Elektronen aus der Sperrschicht der Freilaufdiode D1 ausgeräumt worden sind. Das Erreichen dieses unteren Umkehrpunktes des Strom i_{L2} wird überwacht und der Schalter S2 nach Erkennen dieses unteren Umkehrpunktes wieder geschlossen, so daß der Strom wieder ansteigt. D.h. daß hochfrequente Einschalten des Schalters S2 erfolgt immer dann, wenn der untere Umkehrpunkt des Stroms iL2 erreicht worden ist. Das Öffnen des Schalters S2 kann im Prinzip beliebig gewählt werden, wobei der Zeitpunkt des Öffnens des Schalters insbesondere entscheidend für die Leistungszufuhr der Gasentladungslampe EL ist, so daß durch geeignetes Einstellen des Öffnungszeitpunkts die der Lampe zugeführte Leistung geregelt bzw. konstant gehalten werden kann. Als Schaltkriterium kann hierfür beispielsweise die Zeit oder der Maximalwert des Zweigstroms iL2 herangezogen werden. Durch die Maßnahme, daß der jeweils hochfrequent abwechselnd ein- und ausgeschaltete Schalter S1 bzw. S2 jeweils im unteren Umkehrpunkt des Stroms iL2, d.h. in der Nähe des Stromwerts Null, wieder eingeschaltet wird, wird der jeweilige Feldeffekttransistor S1 bzw. S2 geschont, d.h. vor Zerstörung geschützt, und es können Feldeffekttransistoren als Schalter S1 bzw. S2 verwendet 10 werden, die verhältnismäßig lange Ausräumzeiten für die entsprechende Freilaufdiode aufweisen.

Dies soll nachfolgend näher erläutert werden. Bevor der Schalter S2 geschlossen wird, liegt über ihm eine Spannung an, die im vorliegenden Fall ca. 400 Volt beträgt. Wird der Schalter S2 geschlossen, bricht diese Spannung zusammen, d.h. sie fällt sehr rasch von 400 Volt auf 0 Volt ab. Die besondere Eigenschaft eines Feldeffekttransistors ist es jedoch, daß der Strom bei Aktivierung des entsprechenden Feldeffekttransistors bereits zu fließen beginnt, ehe die entsprechende Spannung auf 0 Volt abgefallen ist. In diesem kurzen Zeitabschnitt zwischen Anstieg des für den Feldeffekttransistor fließenden Stroms und dem Erreichen der Spannung 0 Volt wird durch das Produkt des Stroms und der Spannung eine dem 5 jeweiligen Feldeffekttransistor zugeführte Leistung gebildet, die den Feldeffekttransistor zerstören kann. Daher ist es vorteilhaft, den Feldeffekttransistor bei einem geringstmöglichen Stromfluß, insbesondere in der Nähe des Stromwerts Null, zu schalten.

Des weiteren ist zu beachten, daß der über die Induktivität L2 fließende Strom iL2 über die Freilaufdiode von D1 fließt, wenn der Schalter S1 offen ist und auch der Schalter S2 noch offen ist. Wird der Schalter S2 geschlossen und der Schalter S1 geöffnet, dauert es eine bestimmte Zeitspanne, bis die Elektronen aus der Sperrschicht der Freilaufdiode D1 ausgeräumt werden konnten. Während dieser Zeit ist der Feldeffekttransistor S1 praktisch in einem leitenden Zustand. Das bedeutet, daß der Feldeffekttransistor S2 während einer relativ kurzen Zeitspanne bis zum Ausräumen der Sperrschicht der Freilaufdiode D1, die dem Feldeffekttransistor S1 zugeordnet ist, an der vollen Betriebsspannung Uo, die ca. 400 Volt beträgt, anliegt, wodurch es ebenfalls zu der zuvor beschriebenen Überbelastung und ggf. sogar Zerstörung des Feldeffekttransistors S2 kommen kann. Aufgrund der zuvor vorgeschlagenen Vorgehensweise, nämlich dem Einschalten des Schalters S2 immer dann, wenn der über die Induktivität L2 fließende Strom iL2sein Minimum erreicht hat, ist der zuvor anhand der Ausräumzeit des Schalters bzw. Feldeffekttransistors S1 beschriebene Effekt nahezu unbeachtlich, so daß für die Schalter S1 - S4 auch Feldeffekttransistoren verwendet werden können, die relativ lange Ausräumzeiten für die damit verbundenen Freilaufdioden aufweisen. Es gibt zwar bereits Schaltelemente mit sehr kurzen Ausräumzeiten, wie z. B. den sog. IGBT (Insulated Gate Bipolar Transistor), wobei diese Bauelemente jedoch sehr teuer sind. Mit Hilfe der vorliegenden Erfindung kann somit auf die Verwendung derartig teurer Bauelemente verzichtet werden.

Für die zuvor beschriebene Vorgehensweise ist erforderlich, daß der augenblickliche Wert des Stroms iL2 sowie der Zeitpunkt des Erreichens seines Umkehrpunkts bekannt ist. Der augenblickliche Wert des Stroms iL2 kann beispielsweise durch Messen der an dem Widerstand R1 abfallenden Spannung bestimmt werden. Der untere Umkehrpunkt des Stroms iL2 kann bspw. durch eine transformatorisch an der Spule L2 abgegriffene Spannung bestimmt. Zu diesem Zweck kann eine (in Fig. 6 nicht dargestellte) Wicklung oder Spule transformatorisch mit der Spule L2 gekoppelt werden, die zu einer Differenzierung des über die Spule L2 fließenden Stroms iL2 führt und somit eine Aussage über den Umkehrpunkt des Stroms iL2 zuläßt. Der Normalbetrieb der in Fig. 6 gezeigten Schaltungsanordnung soll nachfolgend anhand des in Fig. 7 dargestellten Diagramms erläutert werden, wobei in Fig. 7 zeitabhängig der Verlauf der am Knotenpunkt zwischen den Schaltern S1 und S2 anliegenden Spannung, der Lampenspannung uFL und des über die Spule L2 fließenden Stroms iL2 dargestellt ist. Insbesondere ist in Fig. 7 der Fall dargestellt, daß während einer ersten Zeitspanne T1 der in Fig. 6 gezeigten Schaltungsanordnung die Brückendiagonale mit den Schaltern S2 und S3 aktiviert ist, wohingegen während einer anschließenden Zeitspanne T2 die Brückendiagonale mit den Schaltern S1 und S4 aktiviert ist. D.h. während der Zeitspanne T1 ist der Schalter S3 dauerhaft geschlossen, und die Schalter S1 und S4 sind dauerhaft geöffnet. Des weiteren wird während dieser Zeitspanne T1 der Schalter S2 hochfrequent abwechselnd ein- und ausgeschaltet. Aus Fig. 7 ist insbesondere ersichtlich, daß der Schalter S2 stets geschlossen wird, wenn der über die Spule L2 fließende Strom iI2 seinen unteren Umkehrpunkt, d.h. seinen minimalen Wert, erreicht hat, so daß sich der impulsartige Verlauf der Spannung u, ergibt. Die Steilheit der Flanken des Stroms iL2 ist durch die Induktivität der Spule L2 bestimmt. Durch Verändern des Spitzenwert des Stroms iI2, d.h. des Zeitpunkts des Öffnens des Schalters S2, kann der Strommittelwert des Stroms iL2 verändert und somit die der Lampe EL zugeführte Leistung und deren Farbtemperatur geregelt bzw. konstant gehalten werden. Der hochfrequente Verlauf des Stroms iL2 wird durch die Bauelemente L2 und C2 geglättet, so daß sich der in Fig. 7 gezeigte geglättete Verlauf der an die Gasentladungslampe EL angelegten Spannung uEL ergibt.

Nach Ablauf der Zeitspanne T2, werden die Schalter S2 und S3 dauerhaft geöffnet, und der Schalter S4 wird dauerhaft eingeschaltet. Analog zum Schalter S2 während der Zeitspanne T1 wird nunmehr der Schalter S1 hochfrequent abwechselnd ein- und ausgeschaltet, so daß sich der in Fig. 7 gezeigte Verlauf der Spannungen Uj und uEL sowie des Stroms i_{L2} ergibt. Wie bereits erwähnt worden ist, wird mit Hilfe einer Steuerschaltung wiederholt zwischen den Betriebsphasen während der Zeitspannen T1 und T2 umgeschaltet, wobei diese Umpolfrequenz insbesondere im Bereich 80 - 150 Hz liegen kann, während die hochfrequente Taktfrequenz des Schalters S2 (während der Zeitspanne TA bzw. des Schalters S1 (während der Zeitspanne T2) im Bereich um 45 kHz liegen kann.

Durch das niederfrequente Umschalten bzw. Umpolen zwischen den Brückendiagonalen S1-S4 und S2-S3 entsteht zwangsläufig ein Brummen, welches aufgrund seiner niedrigen Frequenz an sich relativ leise und nicht störend ist. Durch die steilen Flanken am Umschaltzeitpunkt zwischen den Zeitspannen Tj und T2 entstehen jedoch Oberwellen, die sich störend auswirken. Aus diesem Grunde ist die Steuerschaltung, welche die Schalter S1-S4 ansteuert, vorteilhafter Weise derart auszugestalten, daß sie die Stromspitzen des Stroms iL2 vor und nach dem Umschalten zwischen den Betriebsphasen T1 und T2 reduziert. Dies kann beispielsweise durch eine spezielle Software oder durch eine spezielle Anpassung der Hardware der Steuerschaltung 5 geschehen, die die letzten Stromspitzen während der Zeitspanne Tj sowie die ersten Stromspitzen während der Zeitspanne T2 reduziert, um auf diese Weise die Flanken beim Umschalten zwischen den Betriebsphasen T) und T2 abzuflachen. In diesem Fall ergibt sich der in Fig. 7 gestrichelt dargestellte Verlauf des Stroms i_{I2} bzw. der Lampenspannung uEL. Aus dieser gestrichelten Darstellung ist ersichtlich, daß vor und nach dem Umschaltzeitpunkt die Stromspitzen geringfügig gegenüber dem ursprünglichen Verlauf reduziert sind und somit ein etwas weicherer Übergang der Lampenspannung uEL erzielt wird.

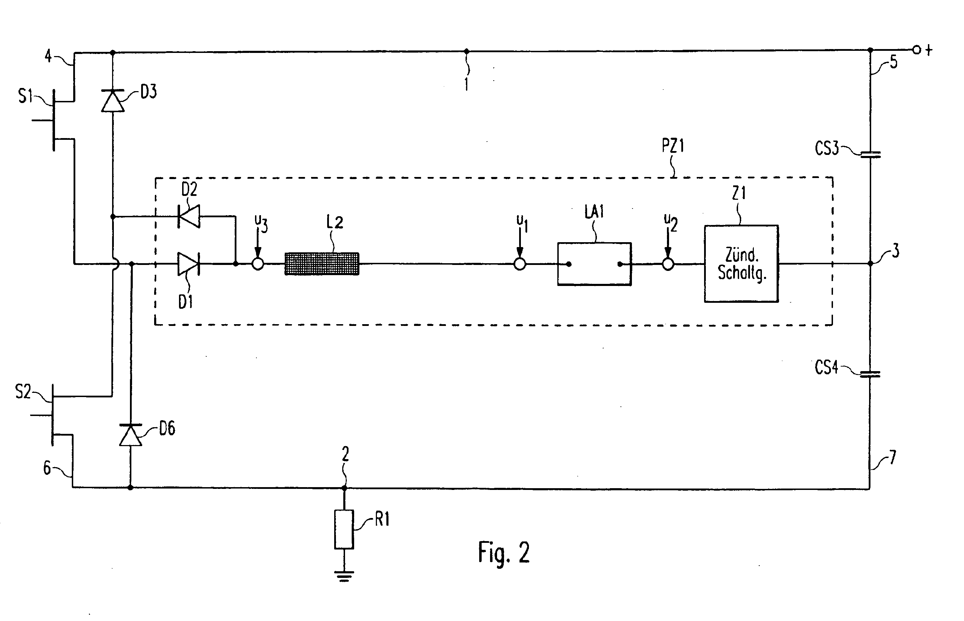

Bei der eben beschriebenen Steuerung läuft nach dem Öffnen des hochfrequent geschalteten Schalters der Strom weiter über die Freilaufdiode und nimmt dabei relativ langsam ab, wenn der zweite Schalter der gerade aktivierten Brückendiagonalen weiterhin geschlossen bleibt. Dies führt zu einem kleineren Stromspitzenwert und dementsprechend auch zu einer kleineren Verlustleistung. Allerdings kann es vorkommen, daß zu einem Zeitpunkt, zu dem die Elektronen aus den Sperrschichten der Freilaufdioden ausgeräumt worden sind und somit der untere Umkehrpunkt des Stromes i_{L2} erreicht worden ist, dieser noch nicht ausreichend abgefallen ist und somit die Schalter beim Schließen immer noch einer hohen Belastung ausgesetzt sind. Um diese Belastungen auszuschließen, können in einer Weiterbildung die Schalter entsprechend dem Diagramm in Fig. 2b gesteuert werden.

Dieses Diagramm zeigt den Stromverlauf i_{L2} und den Zustand des zweiten und des dritten Schalters 2, 3 während der Zeitspanne T. Die beiden anderen Schalter sind in diesem Zeitraum T, geöffnet. Während einer ersten Phase x sind beide Schalter geschlossen und der Strom iL2 steigt kontinuierlich an. Wie bei der eben beschriebenen Steuerung ist während einer zweiten Phase x2, deren Beginn durch das Erreichen eines Maximalwerts von iL2 oder durch eine vorgegebene Dauer von Xj bestimmt sein kann, der zweite Schalter S2 geöffnet und iI2 nimmt langsam ab. Zusätzlich wird nun allerdings ab einem vorgegebenen Zeitpunkt nach dem Öffnen des zweiten Schalters S2 in einer dritten Phase x3 auch der dritte Schalter S3 geöffnet. Der Strom fließt nun über die beiden Freilaufdioden des ersten und des vierten Schalters und nimmt nun stärker ab als während der zweiten Phase x2. Damit kann sichergestellt werden, daß i_{L2} auch tatsächlich einen negativen Wert erreicht, bevor die Sperrschichten der Freilaufdioden ausgeräumt sind. Erreicht i_{L2} den unteren Umkehrpunkt, werden beide Schalter wieder geschlossen und die Steuerung befindet sich wieder im Zustand der ersten Phase x1. Das Öffnen des dritten Schalters S3 - also die dritte Phase x3 - entfällt allerdings, wenn der Strom i_{L2} vorher schon auf Null abgesunken ist, da in diesem Fall keine hohen Belastungen beim Öffnen Schalter auftreten. Stattdessen wird sofort mit der ersten Phase x, fortgefahren und der zweite Schalter S2 wieder geöffnet. Das niederfrequente Umschalten zwischen den beiden Brückendiagonalen erfolgt analog zu dem vorherigen Ausführungsbeispiel, wobei auch hier vorteilhaft die Stromspitzen des Stroms iL2 vor und nach dem Umschalten zwischen den Betriebsphasen T1 und T2 reduziert werden können.

Bei dem Stand der Technik wird der Ausschaltzeitpunkt des hochfrequent getakteten Schalters dadurch bestimmt, dass der Lampenstrom einen fest vorgegeben Abschaltschwellenwert erreicht. Dabei kommt es zu Ungenauigkeiten, das der negative Stromflussbereich unmittelbar nach dem Einschalten des Schalters variieren kann, was die Leistungsregelung ungenau macht.

Die Aufgabe der Erfindung ist nunmehr, die Leistungsregelung einer Gasentladungslampe in einer Halbbrücken- oder Vollbrückenschaltung genauer zu machen.

Diese Aufgabe wird gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung betrifft ein Verfahren zur Regelung, insbesondere zur Leistungsregelung einer Gasentladungslampe mittels einer Halbbrückenschaltung mit zwei Schaltern und zwei Kapazitäten oder einer Vollbrückenschaltung mit zwei aktiven Halbbrücken und somit vier Schaltern.

Bei einer Halbbrückenschaltung wird diese durch eine aktive Halbbrücke mit zwei getakteten Schaltern und eine passive Halbbrücke mit zwei Kapazitäten gebildet. Da nur eine aktive Halbbrücke vorhanden ist, wird bei dieser Schaltung im allgemeinen von einer Halbbrückenschaltung gesprochen.

Die Gasentladungslampe ist dabei in dem Brückenzweig verschaltet. Es wird eine Brückendiagonale der Halbbrückenschaltung oder Vollbrückenschaltung aktiviert, bei der ein Schalter aktiv getaktet wird und die in der Diagonale liegende Kapazität bzw. bei einer Vollbrückenschaltung ein geschlossener (niederfrequent getakteter) Schalter den Stromfluß übernimmt. Als Rückführgrösse für die Regelung wird ein für den Mittelwert des Lampenstroms repräsentativer gemessener Istwert verwendet, der mit einem Referenzwert als Sollwert verglichen wird.

Die Halbbrückenschaltung bietet den Vorteil, dass gegenüber der Vollbrückenschaltung im Stand der Technik auf zwei aktiv getaktete Schalter verzichtet werden kann und auch die erforderliche Ansteuerung einschließlich der hochseitigen Ansteuerung für den oberen der beiden Schalter entfallen kann.

Abhängig von einer Differenz zwischen dem Istwert und dem Sollwert kann das Tastverhältnis des aktuellen Einschaltvorgangs des aktiv getakteten Schalters und/oder eines folgenden Einschaltvorgangs eingestellt werden.

Dabei kann das Tastverhältnis des aktiv getakteten Schalters nur bei jedem n-ten Einschaltvorgang verändert werden, wobei n grösser oder gleich 2 ist.

Das Tastverhältnis des aktiv getakteten Schalters kann bspw. über den Zeitpunkt des Ausschaltens des aktiv getakteten Schalters als Steuergrösse verändert werden.

Das Tastverhältnis kann durch adaptive Vorgabe eines Ausschaltpegels einer gemessenen für den Lampenstrom repräsentativen Grössen eingestellt werden, wobei bei Erreichen des Ausschaltpegels der aktiv getaktete Schalter ausgeschaltet wird.

Als Steuergrösse der Leistungsregelung kann alternativ oder zusätzlich zu der Taktung des aktiv getakteten Schalters der Pegel der die Halbbrückenschaltung oder Vollbrückenschaltung versorgenden DC-Busspannung verwendet werden.

Die Busspannung kann mittels einer aktiven PFC-Schaltung erzeugt werden, wobei der Pegel der erzeugten Busspannung durch Veränderung der Taktung eines Schalters der PFC-Schaltung ausgeführt wird.

Als für den Mittelwert des Lampenstroms repräsentativer gemessener Istwert kann ein Abtastwert des Lampenstroms werden, vorzugsweise gemessen bei der Hälfte der Einschatzeitdauer des aktiv getakteten Schalters.

Der für den Mittelwert des Lampenstroms repräsentative Istwert kann durch eine kontinuierliche Messung des Lampenstroms (oder einer dafür repräsentativen Grösse) ermittelt werden.

Der kontinuierlich gemessene Lampenstrom kann mit einem Referenzwert verglichen werden und der für den Mittelwert repräsentative Istwert kann das Tastverhältnis des Vergleichswerts über die Einschaltzeitdauer des aktiv geschalteten Schalters sein.

Das Tastverhältnis kann anhand eines bidirektionalen digitalen Zählers ermittelt werden.

Der Referenzwert kann von einem vorgegebenen Dimmwert und/oder der gemessenen Lampenspannung abhängen.

Die Erfindung bezieht sich auch auf eine Integrierte Schaltung, insbesondere ASIC, die zur Durchführung eines Verfahrens wie oben ausgeführt ausgelegt ist.

Weiterhin bezieht sich die Erfindung auf ein Betriebsgerät für eine Hochdruck- oder Niederdruckgasentladungslampe, aufweisend eine derartige integrierte Schaltung.

Erfindungsgemäss ist auch vorgesehen eine zur Leistungsregelung einer Gasentladungslampe, die eine Halbbrückenschaltung mit zwei Schaltern oder eine Vollbrückenschaltung aufweist, wobei die Gasentladungslampe in dem Brückenzweig verschaltbar ist. Eine Steuereinheit aktiviert eine Brückendiagonale, indem sie den Schalter der Brückendiagonale aktiv und die in der Diagonale liegende Kapazität den Stromfluß übernimmt, wodurch die Gasentladungslampe mit einer hochfrequenten Spannung versorgt ist. Der Steuereinheit wird ein für den Mittelwert des Lampenstroms repräsentativer gemessener Istwert zurückgeführt, der mit einem Referenzwert verglichen wird.

Die Steuereinheit kann abhängig von einer Differenz zwischen dem Istwert und dem Sollwert das Tastverhältnis des aktuellen Einschaltvorgangs des aktiv getakteten Schalters und/oder eines folgenden Einschaltvorgangs einstellen.

Die Steuereinheit kann das Tastverhältnis des aktiv getakteten Schalters nur bei jedem n-ten Einschaltvorgang verändern, wobei n grösser oder gleich 2 ist.

Die Steuereinheit kann das Tastverhältnis des aktiv getakteten Schalters über den Zeitpunkt des Ausschaltens des aktiv getakteten Schalters als Steuergrösse verändern. Die Steuereinheit kann das Tastverhältnis durch adaptive Vorgabe eines Ausschaltpegels einer gemessenen für den Lampenstrom repräsentativen Grössen einstellen, wobei die Steuereinheit bei Erreichen des Ausschaltpegels der aktiv getaktete Schalter ausschaltet.

Die Steuereinheit kann neben der Regelung des Betriebs der Gasentladungslampe auch eine Zwischenkreisschaltung ansteuern und von der Zwischenkreisschaltung Rückführsignale erhalten, wobei die Zwischenkreisspannung die die Halbbrückenschaltung oder Vollbrückenschaltung versorgende DC-Busspannung erzeugt.

Die Steuereinheit kann als Steuergrösse der Leistungsregelung alternativ oder zusätzlich zu der Taktung des aktiv getakteten Schalters den Pegel der die Halbbrückenschaltung oder Vollbrückenschaltung versorgenden DC-Busspannung verwenden.

Zur Erzeugung der Busspannung kann eine aktive PFC-Schaltung vorgesehen sein, wobei die Steuereinheit den Pegel der erzeugten Busspannung durch Veränderung der Taktung eines Schalters der PFC-Schaltung ausführt.

Der Steuereinheit kann als ein für den Mittelwert des Lampenstroms repräsentativer gemessener Istwert ein Abtastwert des Lampenstroms, vorzugsweise gemessen bei der Hälfte der Einschatzeitdauer des aktiv getakteten Schalters, zurückgeführt sein.

Die Steuereinheit kann zur Ermittelung des für den Mittelwert des Lampenstroms repräsentativen Istwerts kontinuierlich den Lampenstrom (oder eine dafür repräsentative Grösse) messen.

Die Steuerschaltung kann einen Komparator aufweisen, der den kontinuierlich gemessenen Lampenstrom mit einem Referenzwert vergleicht und die Steuerschaltung als für den Mittelwert repräsentativen Istwert das Tastverhältnis des Ausgangssignals des Komparators verwendet.

Das Ausgangssignal des Komparators kann einem bidirektionalen digitalen Zähler der Steuerschaltung zugeführt sein.

Die Steuerschaltung kann den Referenzwert abhängig von einem extern oder intern vorgegebenen Dimmwert und/oder der gemessenen und der Steuerschaltung zugeführten Lampenspannung einstellen.

Die vorliegende Erfindung wird nachfolgend anhand bevorzugter Ausführungsbeispiele unter Bezugnahme auf die beigefügte Zeichnung näher beschrieben.
Fig. 1 zeigt ein erfindungsgemäßes Betriebsgerät für in einer Halbbrücke verschaltete Gasentladungslampen,
Figur 2 zeigt im Detail eine Halbbrückenschaltung zum Betrieb einer Lampe sowie die daran abgreifbaren Messignale,
Figur 3 zeigt den Verlauf von Ansteuersignalen von einem Schalter der Halbbrücke sowie der Mittenpunktspannung U_{L3} und des Lampenstroms I_{Lamp},
Figur 4 zeigt den Aufbau einer Regelung des Lampenstroms,
Figur 5 zeigt den zeitlichen Verlauf von Signalen der Regelung von Figur 4,
Fig. 6 zeigt eine aus der EP1114571B1 bekannte Schaltung,
Fig. 7a zeigt ein erstes Diagramm, welches zeitabhängige Spannungs- und Stromverläufe in der in Fig. 6 dargestellten Schaltungsanordnung darstellt,
Fig. 7b zeigt ein zweites Diagramm, welches den zeitabhängigen Stromverlauf und Schaltzustände in der in Fig. 1 dargestellten Schaltungsanordnung entsprechend einer Weiterbildung darstellt,
Fig. 8 zeigt ein erfindungsgemäßes Betriebsgerät für in einer Vollbrücke verschaltete Gasentladungslampen, und
Figur 9 zeigt im Detail eine Vollbrückenschaltung zum Betrieb einer Lampe sowie daran abgreifbaren Messignale.

Fig. 1 zeigt ein elektronisches Vorschaltgerät zum Betreiben von Gasentladungslampen, insbesondere von Hochdruck-Gasentladungslampen.

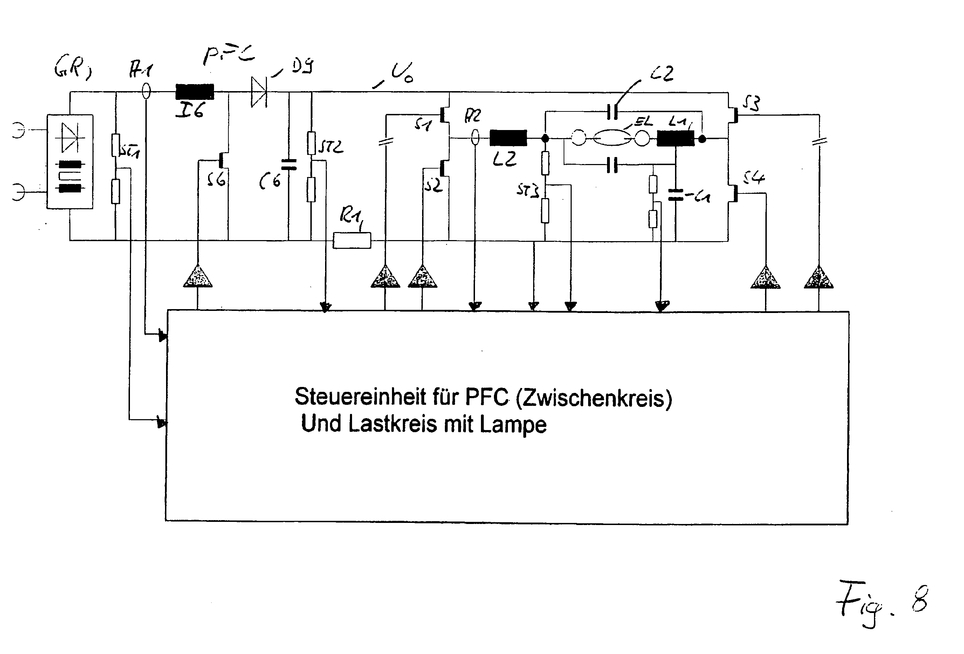

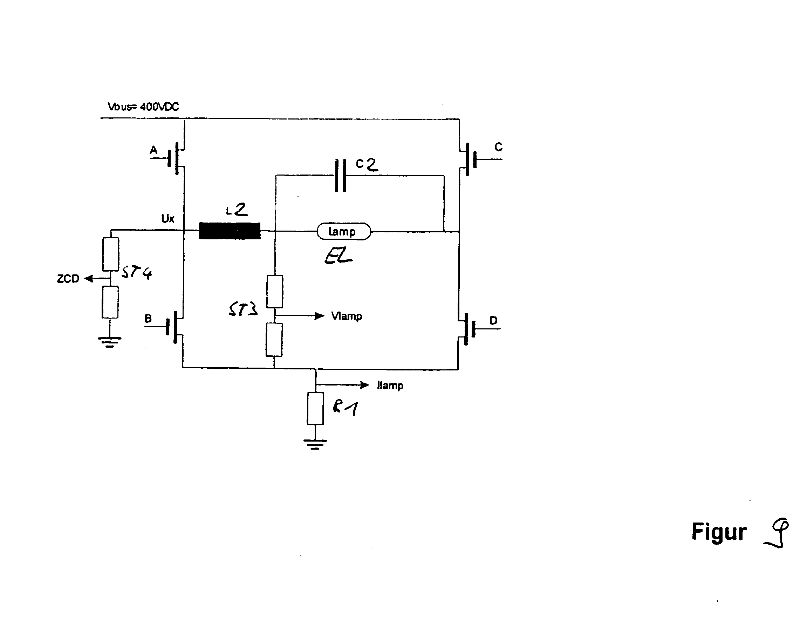

(Figuren 1 und 2 beziehen sich auf ein Ausführungsbeispiel mit einer aktiven Halbbrücke, während Figuren 8 und 9 ein Ausführungsbeispiel mit zwei als Vollbrücke verschalteten Halbbrücken zeigen. Daher kann der Grossteil der Beschreibung von Figuren 1 und 2 auch auf Figuren 8 und 9 übertragen werden. Zusätzlich ist dort im wesentlichen eine Ansteuerung für die zwei weiteren Schalter vorgesehen.)

Eingangsseitig weist das elektronische Vorschaltgerät einen mit Netzspannung versorgten Gleichrichter GR auf, an den sich eine aktive Leistungsfaktor-Korrekturschaltung PFC (Power Factor Correction) anschliesst, die als Hochsetzsteller fungiert. Die PFC-Schaltung weist eine Induktivität I6 in Serie mit einer Diode D9 auf, wobei die Induktivität I6 bei Einschalten eines Schalter S6 magnetisiert wird, wobei ein Kondensator C6 aufgeladen wird, und bei ausgeschaltetem Schalter S6 sich entmagnetisiert, so dass sich an dem Kondensator C6 eine hochgesetzte Gleichspannung U₀ einstellt, die einen dreieckförmigen Rippel mit der Frequenz der Taktung des Schalter S6 aufweist.

Ausgangsseitig umfaßt das in Fig. 1 gezeigte elektronische Vorschaltgerät eine Halbbrückenschaltung mit zwei Schaltern S1 und S2 und zwei Kapazitäten CS3 und CS4. Eine Beschreibung der weiteren Elemente wird anhand der Fig. 2 gegeben.

Der Steuereinheit können Rückführsignale aus dem Bereich der PFC-Zwischenkreisspannung zurückgeführt werden, wie bspw.:
- die Eingangsspannung über einen Spannungsteiler ST1,
- der Strom durch die Induktivität 16 mittels eines Abgriffs A1 (oder eine Überwachung der Spannung über der Induktivität I6), und
- die Busspannung U₀ über einen Spannungsteiler ST2.

Die Steuereinheit kann den Pegel der Ausgangsspannung durch Taktung des Schalters S6 einstellen und mittels der zurückgeführten Busspannung vorzugsweise digital regeln.

Der Steuereinheit können Rückführsignale aus dem Bereich des die Lampe EL enthaltenden Lastkreises mit der Halbbrückenschaltung zurückgeführt werden:
- die Lampenspannung V_{Lamp} mittels eines Spannungsteilers ST3,
- den Lampenstrom I_{Lamp} mittels des Shunts R1 (nur während des Einschaltens des aktiv getakteten Schalters der jeweils aktivierten Brückendiagonale), und
- der Brückenzweigstrom mittels eines Abgriffs A2 (induktiv oder durch Abgriff an dem Mittenpunkt der Schalter S1 und S2).

Figur 2 zeigt im Detail die Halbbrückenschaltung mit den Rückführsignalen:
- Mittels eines Spannungsteilers , die Mittenpunktspannung U_{L3}, die für den Brückenzweigstrom repräsentativ ist,
- Mittels eines oder mehrerer Spannungsteiler die Lampenspannung Vₗₐₘₚ anhand der Spannungen U₁ und U₂, und
- mittels des Shunts R1, der Lampenstrom Iₗₐₘₚ.

Die in Figur 2 gezeigte Schaltungsanordnung umfasst eine Brückenschaltung mit einem oberen und einem unteren Diagonalpunkt 1, 2 sowie einem rechten Diagonalpunkt 3. Der linke Diagonalpunkt kann nicht eindeutig bezeichnet werden.

Die Brückenschaltung weist vier Brückenzweige 4, 5, 6, 7 auf. Die Brückenzweige 4 und 6 enthalten je ein Schalterelement in Form eines FET. Die Schalterelemente sind mit S1 und S2 bezeichnet.

An den Diagonalpunkten 1 und 2 der Brückenschaltung liegen die Pole einer Gleichspannungsquelle. Die Gleichspannungsquelle kann der Schaltungsanordnung über einen Bus zugeführt werden. Es ist aber auch möglich, dass die Gleichspannung in üblicher Weise durch Wechselrichten der Netzspannung erzeugt wird.

Von dem Diagonalpunkt 3 geht ein Zweig PZ1 aus. Der Zweig PZ1 enthält in Serienschaltung eine Zündschaltung Z1, eine HID-Lampe LA1 und eine Induktivität L2.

Weiterhin weist der Zweig PZ1 ein Diodennetzwerk auf, dass aus vier Dioden D1, D2, D3 und D6 besteht. Die Diode D1 verbindet die Induktivität L2 mit dem einen Anschluss des FET S1, und zwar demjenigen, der nicht mit einem Pol der Gleichspannungsquelle verbunden ist. Der andere Anschluss des FET S1 liegt an dem positiven Pol der Gleichspannungsquelle. Die Diode D2 verbindet die Induktivität L2 mit einem Anschluss des FET S2, und zwar mit demjenigen, der nicht an einem Pol der Gleichspannungsquelle liegt. Der andere Anschluss des FET S2 liegt an dem Knotenpunkt des Halbbrückenzweiges 6 mit dem Halbbrückenzweig 7. Die Diode D3 verbindet den nicht mit dem negativen Pol der Gleichspannungsquelle verbundenen Anschluss des FET S2 mit dem positiven Pol der Gleichspannungsquelle. Die Diode D6 verbindet den nicht an dem positiven Pol der Gleichspannungsquelle liegenden Anschluss des FET S1 mit dem negativen Pol der Gleichspannungsquelle. Die Dioden D1 und D2 sind auf Durchlass gepolt. Die Dioden D3 und D6 sind in Sperrrichtung gepolt. Vorzugsweise ist parallel zur HID-Lampe LA1 ein Kondensator C2 (nicht dargestellt) als Filter- oder Glättungskondensator parallel geschaltet. Dieser kann im Betrieb die Lampenspannung glätten und während der Entmagnetisierung der Induktivität L2 die Lampenspannung aufrecht erhalten.

Zwischen den Knotenpunkt des Halbbrückenzweiges 6 mit dem Halbbrückenzweig 7 und dem negativen Pol der Gleichspannungsquelle ist ein niederohmiger Shunt R1 zwischengeschaltet, der jedoch nur zur Messung von Strömen dient und auf die Spannungen in der Schaltung keinen messbaren Einfluß hat.

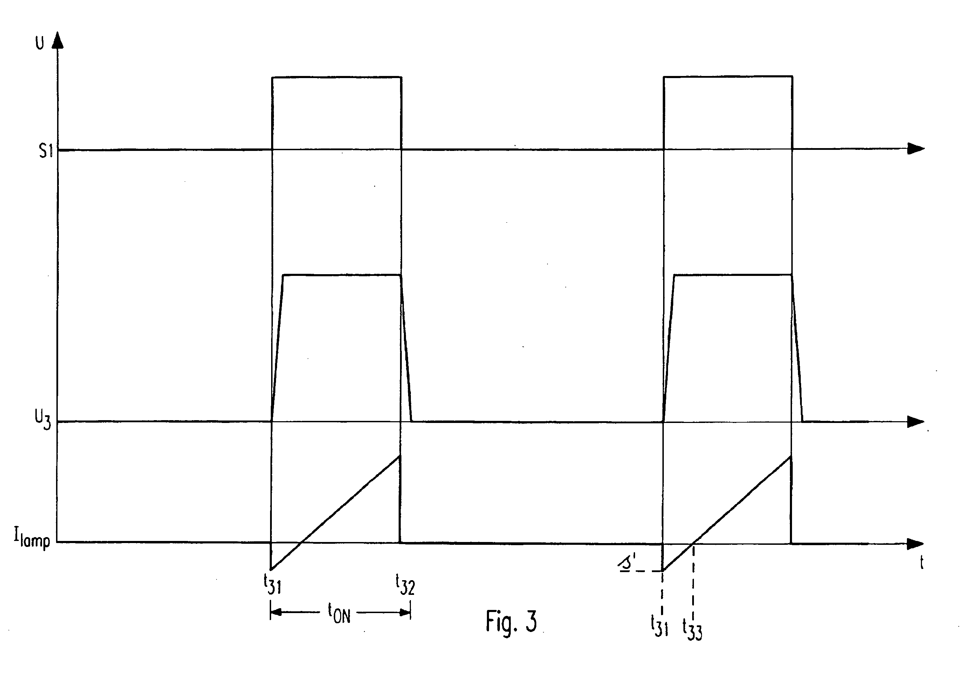

In Figur 3 werden Signalverläufe bei aktivierter Brückendiagonale A/D (bei der Bezeichnung wie in Figur 2) dargestellt. Dabei ist wie ersichtlich der Schalter S1 aktiv getaktet und zwischen den Zeitpunkten T₃₁ und T₃₂ (Zeitdauer t_{ON}) eingeschaltet. Wie ersichtlich kann der linear ansteigende Lampenstrom Ilamp nur während der Zeitdauer t_{ON} an dem Shunt R1 erfasst werden, während der der Schalter S1 eingeschaltet ist. In der Zeitdauer des Ausschaltens des Schalters S1, in der die Induktivität L2 den Strom durch die Lampe absinkend bis zum unteren Umkehrpunkt weitertreibt, kann der Lampenstrom mittels des Shunts R1 dagegen nicht erfasst werden.

Der Einschaltzeitpunkt des hochfrequent getakteten Schalters (hier: Schalter A bzw. S1) kann durch die Überwachung des durch die Induktivität L2 fließende Zweigstroms iL2 festgelegt werden. Beispielsweise kann überwacht werden, ob der durch die Induktivität L2 fließende Zweigstrom iL2 wieder auf Null abgesunken bzw. ob die Induktivität L2 entmagnetisiert ist. Dies kann mittels einer Sekundärwicklung an der Induktivität L2 oder auch mittels einer Überwachung der Mittelpunktspannung zwischen den Schaltern S1 und S2 erfolgen.

Bei dem Stand der Technik wird der Ausschaltzeitpunkt des hochfrequent getakteten Schalters (hier: Schalter A bzw. S1) dadurch festgelegt, wenn der Lampenstrom einen festgelegten Schwellenwert Ipeak erreicht. Dabei bleibt - wie bereits eingangs erläutert - etwaige Schwankungen des maximalen negativen Strompegels ΔI bei dem Umkehrpunkt T31 und dem unberücksichtigt, was diese Art der Leistungsregelung ungenau macht.

Gemäss der Erfindung wird nunmehr der Abschaltzeitpunkt des aktiv getakteten Schalters (im Beispiel der Figur 2 Schalter S1) adaptiv gestaltet, so dass im Ergebnis die Einschaltzeitdauer t_{ON} variabel ist. Dies kann bspw. dadurch erzielt werden, indem die Abschaltschwelle für den Lampenstrom adaptiv gestaltet wird und/oder die Einschaltzeitdauer des aktiv getakteten Schalters adaptiv einstellbar ist.

Die Adaptierung erfolgt dabei anhand eines Rückführsignals, das für den Mittelwert des Lampenstroms (Mittelung über eine oder mehrere Einschaltzeitdauern des aktiv getakteten Schalters) repräsentativ ist. Durch Regelung auf den Mittelwert des Lampenstroms ist die Lampenleistungsregelung wesentlich genauer.

Der Mittelwert des Lampenstroms kann erfasst werden, indem zu dem Zeitpunkt tₒₙ/2, also zur Hälfte der Einschaltzeitdauer t_{ON} des aktiv getakteten Schalters ein Abtastwert erfasst und ausgewertet wird. Ist dieser höher als der Soll-Mittelwert, kann die Einschaltzeitdauer oder die Abschaltstromschwelle verringert werde, und zwar im aktuellen order in einem folgenden Einschaltvorgang des aktiv getakteten Schalters.

Im folgenden soll indessen ein Ausführungsbeispiel erläutert werden, bei dem der Lampenstrom kontinuierlich erfasst und zu der Steuereinheit zurückgeführt wird.

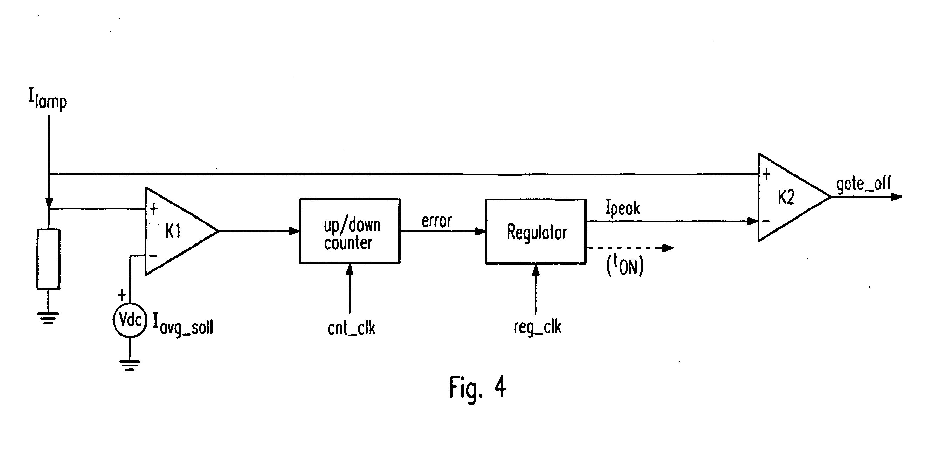

Wie in Figur 4 gezeigt wird in der Steuereinheit der Lampenstrom Iₗₐₘₚ durch einen Komparator K1 mit einem Referenzwert I_{avg_soll} verglichen. Dieser Referenzwert I_{avg_soll} gibt also den Soll-Mittelwert für den Lampenstrom vor und kann bspw. von einer externen oder internen Dimmwertvorgabe und/oder der Höhe der Lampenspannung abhängen. Dieser Referenzwert I_{avg_soll} ist ein Mass für die Sollleistung.

Um eine konstante Lampenleistung zu erzielen, muss bei schwankender Lampenspannung Ulamp die Sollwertvorgabe für den Mittelwert des Lampenstroms invers nachgeführt werden, so dass sich ergebende Produkt aus Lampenstrom und Lampenspannung konstant geregelt bleibt. Bei konstanter Lampenspannung entspricht natürlich eine Mittelstromregelung genau einer Lampenleistungsregelung.

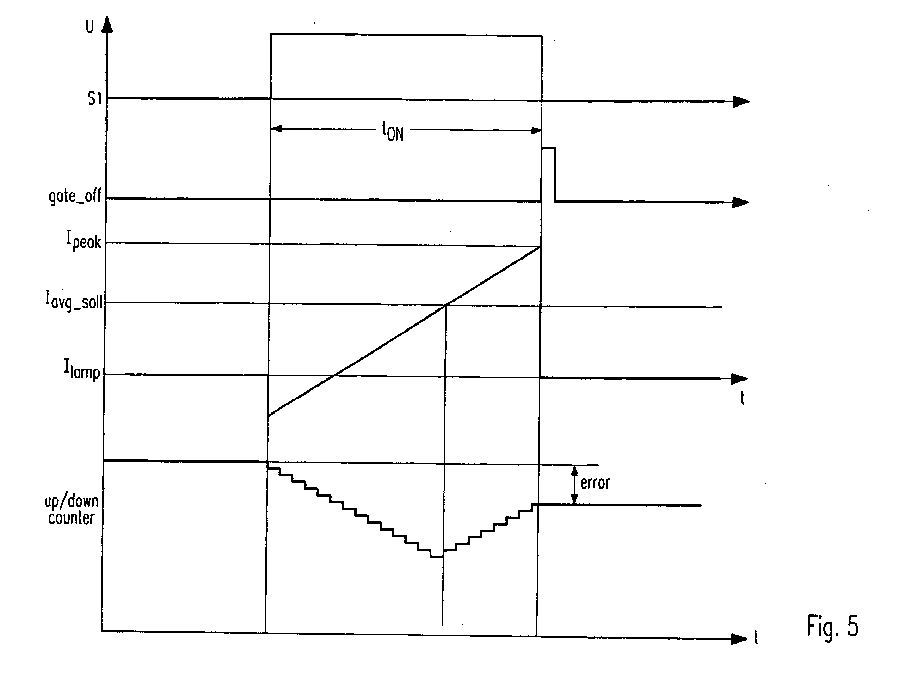

Bei diesem Ausführungsbeispiel ist es Ziel der Regelung, dass das Tastverhältnis des Ausgangs des Komparators K1 während einer Einschaltzeitdauer t_{ON} des aktiv getakteten Schalters 50% beträgt. In dem Ausführungsbeispiel wird dazu das Ausgangssignal des Komparators einem digitalen Up-/Down-Zähler COUNTER zugeführt, der von einem Zeitgeber der Steuereinheit getaktet ist (Taktsignal CNT_CLK). Wie in Figur 5 ersichtlich zählt der Zähler COUNTER in eine Richtung, solange der Lampenstrom Ilamp unterhalb des Referenzwerts Iavg_soll liegt, und in die umgekehrte Richtung, sobald der Lampenstrom Ilamp den Referenzwert I_{avg_soll} überschreitet. Wenn der Istwert des Mittelwerts des Lampenstroms Iₗₐₘₚ genau der Referenzwertvorgabe Iavg_soll entspricht, wird das Tastverhältnis des dem Zähler COUNTER zugeführten Vergleichssignals 50% sein und somit am Ende einer Einschaltzeitdauer der Zählerstand genau seinem Anfangsstand entsprechen.

Jedwege Abweichung wird indessen zu einer Abweichung ERROR des Zählerendsands von dessen Anfangsstand führen. Dieses Abweichungssignal ERROR wird einem vorzugsweise digitalen Regler REGULATOR zugeführt, der ebenfalls von einem Zeitgeber der Steuereinheit getaktet durch ein Signal reg_clk wird. Der Regler REGULATOR implementiert eine Regelstrategie (bspw. PI-Regler) und steuert abhängig vom dem Eingangssignal ERROR und der Regelstrategie eine die Leistung der Gasentladungslampe beeinflussende Stellgrösse an. Diese Stellgrösse kann bspw. eines oder mehreres sein von:
- Busspannung,
- adaptive Abschaltschwelle Ipeak, und/oder
- adaptive Einschaltzeitdauer Ton.

Die Stellgrösse(n) kann im aktuellen Einschaltvorgang, in einem jeden folgenden Einschaltvorgang oder aber in jedem n-ten Einschaltvorgang verändert werden, wobei n eine ganze Zahl grösser oder gleich 2 ist.

Im Beispiel von Figur 4 und 5 wird entweder die Einschaltzeitdauer Ton verändert, oder aber der Regler REGULATOR verändert den Referenzwerts eines weiteren Komparators K2 der Steuereinheit, an dessen nichtinvertierten Eingang der Lampenstrom Iₗₐₘₚ anliegt.

Das Ausgangssignal des weiteren Komparators K2 steuert das Ausschalten gate_off des jeweils aktiv getakteten Schalters der aktivierten Brückendiagonale.

Bei dem Ausführungsbeispiel von Figuren 8 und 9 Ausgangsseitig weist das elektronische Vorschaltgerät eine Vollbrückenschaltung mit vier Schaltern S1 bis S4 (bzw. A bis D) auf.

Die Induktivitäten L1, L2, Lampe EL und Kondensatoren C1, C2 sind wie bezugnehmend auf Fig. 6 verschaltet.

## Patentansprüche

1. Verfahren zur Regelung einer Gasentladungslampe mittels einer Halbbrückenschaltung mit zwei Schaltern oder einer Vollbrückenschaltung mit vier Schaltern,
wobei die Gasentladungslampe (EL) in dem Brückenzweig verschaltet wird und eine Brückendiagonale aktiviert wird, bei der ein Schalter (S1, S2) aktiv getaktet wird,
wobei als Rückführgrösse für die Regelung ein für den Mittelwert des Lampenstroms (I_{Lamp}) repräsentativer gemessener Istwert verwendet wird,
der mit einem Referenzwert (I_{AVG_SOLL}) verglichen wird, **dadurch gekennzeichnet dass** der Lampenstrom (I_{Lamp}), vorzugsweise mittels eines Shunts (R1) nur während der Einschaltzeitdauer des aktiv getakteten Schalters (S1, S2) gemessen wird.

2. Verfahren nach Anspruch 1,
bei dem der aktiv getaktete Schalter (S1, S2) zu einem Zeitpunkt eingeschaltet wird, wenn der indirekt oder direkt erfasste Brückenzweigstrom auf Null abgeklungen ist, vorzugsweise seinen unteren Umkehrpunkt erreicht hat.

3. Verfahren nach Anspruch 1 oder 2,
bei dem abhängig von einer Differenz zwischen dem Istwert und dem Sollwert das Tastverhältnis des aktuellen Einschaltvorgangs des aktiv getakteten Schalters und/oder eines folgenden Einschaltvorgangs eingestellt wird, wobei vorzugsweise das Tastverhältnis des aktiv getakteten Schalters nur bei jedem n-ten Einschaltvorgang verändert wird, wobei n grösser oder gleich 2 ist.

4. Verfahren nach einem der vorhergehenden Ansprüche,
bei dem das Tastverhältnis des aktiv getakteten Schalters über den Zeitpunkt des Ausschaltens des aktiv getakteten Schalters als Steuergrösse verändert wird.

5. Verfahren nach einem der vorhergehenden Ansprüche,
bei dem das Tastverhältnis durch adaptive Vorgabe eine Ausschaltpegels einer gemessenen für den Lampenstrom repräsentativen Grössen eingestellt wird, wobei bei Erreichen des Ausschaltpegels der aktiv getaktete Schalter ausgeschaltet wird.

6. Verfahren nach einem der vorhergehenden Ansprüche,
bei dem als ein für den Mittelwert des Lampenstroms repräsentativer gemessener Istwert ein Abtastwert des Lampenstroms, vorzugsweise gemessen bei der Hälfte der Einschaltzeitdauer des aktiv getakteten Schalters, verwendet wird.

7. Verfahren nach einem der Ansprüche 1 bis 5,
bei dem der für den Mittelwert des Lampenstroms repräsentative Istwert durch eine kontinuierliche Messung des Lampenstroms ermittelt wird.

8. Verfahren nach Anspruch 7,
bei dem der kontinuierlich gemessene Lampenstrom mit einem Referenzwert verglichen wird und der für den Mittelwert repräsentative Istwert das Tastverhältnis des Vergleichswerts über die Einschaltzeitdauer des aktiv geschalteten Schalters ist, wobei vorzugsweise das Tastverhältnis anhand eines bidirektionalen digitalen Zählers ermittelt wird.

9. Verfahren nach Anspruch 7 oder 8,
bei dem der Referenzwert von einem vorgegebenen Dimmwert und/oder der gemessenen Lampenspannung abhängt.

10. Schaltung zur Leistungsregelung einer Gasentladungslampe,
aufweisend eine Halbbrückenschaltung mit zwei Schaltern oder eine Vollbrückenschaltung mit vier aktiven Schaltern,
wobei die Gasentladungslampe in dem Brückenzweig verschaltet wird,
wobei eine Steuereinheit eine Brückendiagonale aktiviert, indem sie einen Schalter der Brückendiagonale aktiv taktet,
wobei der Steuereinheit ein für den Mittelwert des Lampenstroms repräsentativer gemessener Istwert zurückgeführt ist, der mit einem Referenzwert verglichen wird, **dadurch gekennzeichnet dass**
der Lampenstrom (I_{Lamp}), vorzugsweise mittels eines Shunts (R1) nur während der Einschaltzeitdauer des aktiv getakteten Schalters (S1, S2) gemessen wird.

11. Schaltung nach Anspruch 10,
bei dem die Steuereinheit abhängig von einer Differenz zwischen dem Istwert und dem Sollwert das Tastverhältnis des aktuellen Einschaltvorgangs des aktiv getakteten Schalters und/oder eines folgenden Einschaltvorgangs einstellt, wobei vorzugsweise die Steuereinheit das Tastverhältnis des aktiv getakteten Schalters nur bei jedem n-ten Einschaltvorgang verändert, wobei n grösser oder gleich 2 ist.

12. Schaltung nach einem der Ansprüche 10 bis 11,
bei dem die Steuereinheit das Tastverhältnis des aktiv getakteten Schalters über den Zeitpunkt des Ausschaltens des aktiv getakteten Schalters als Steuergrösse verändert.

13. Schaltung nach einem der Ansprüche 10 bis 12,
bei dem die Steuereinheit das Tastverhältnis durch adaptive Vorgabe eine Ausschaltpegels einer gemessenen für den Lampenstrom repräsentativen Grössen einstellt, wobei die Steuereinheit bei Erreichen des Ausschaltpegels der aktiv getaktete Schalter ausschaltet.

14. Schaltung nach einem der Ansprüche 10 bis 13,
bei der die Steuereinheit neben der Regelung des Betriebs der Gasentladungslampe auch eine Zwischenkreisschaltung ansteuert und von der Zwischenkreisschaltung Rückführsignale erhält, wobei die Zwischenkreisspannung die die Halbbrückenschaltung versorgende DC-Busspannung erzeugt.

15. Schaltung nach einem der Ansprüche 10 bis 14,
bei dem die Steuereinheit als Steuergrösse der Leistungsregelung alternativ oder zusätzlich zu der Taktung des aktiv getakteten Schalters den Pegel der die Halbbrückenschaltung versorgenden DC-Busspannung verwendet.

16. Schaltung nach Anspruch 15,
bei der für Erzeugung der Busspannung eine aktive PFC-Schaltung vorgesehen ist,
wobei die Steuereinheit den Pegel der erzeugten Busspannung durch Veränderung der Taktung eines Schalters der PFC-Schaltung ausführt.

17. Schaltung nach einem der Ansprüche 10 bis 16,
bei dem die Steuereinheit zur Ermittelung des für den Mittelwert des Lampenstroms repräsentativen Istwerts kontinuierlich den Lampenstrom misst.

18. Schaltung nach Anspruch 17,
bei dem die Steuerschaltung einen Komparator aufweist, der den kontinuierlich gemessenen Lampenstrom mit einem Referenzwert vergleicht und die Steuerschaltung als für den Mittelwert repräsentativen Istwert das Tastverhältnis des Ausgangssignals des Komparators verwendet, wobei vorzugsweise das Ausgangssignal des Komparators einem bidirektionalen digitalen Zähler der Steuerschaltung zugeführt ist.

19. Schaltung nach einem der Ansprüche 10 bis 18,
die als integrierte Schaltung, vorzugsweise als ASIC ausgebildet ist.

20. Betriebsgerät für Gasentladungslampen,
aufweisend eine Schaltung nach einem der Ansprüche 10 bis 19.

21. Leuchte, aufweisend eine Gasentladungslampe und eine
Betriebsgerät nach Anspruch 20.

22. Beleuchtungssystem,
aufweisend mehrere Leuchten, darunter wenigstens eine gemäss Anspruch 21, wobei die Leuchten vorzugsweise durch eine oder mehrere Busleitungen untereinander und/oder mit einer zentralen Steuereinheit verbunden sind.

## Claims

1. Method for the closed-loop control of a gas discharge lamp by means of a half-bridge circuit comprising two switches or a full-bridge circuit comprising four switches, wherein the gas discharge lamp (EL) is connected in the bridge branch and a bridge diagonal is activated, in which a switch (S1, S2) is actively clocked, wherein a measured actual value which is representative of the mean value of the lamp current (I_{Lamp}) is used as feedback variable for the closed-loop control, said actual value being compared with a reference value (I_{AVG_SET}), **characterized in that** the lamp current (I_{Lamp}) is preferably measured by means of a shunt (R1) only during the on duration of the actively clocked switch (S1, S2).

2. Method according to Claim 1, in which the actively clocked switch (S1, S2) is switched on at a point when the indirectly or directly detected bridge branch current has decayed to zero, preferably has reached its lower reversal point.

3. Method according to Claim 1 or 2, in which, depending on a difference between the actual value and the setpoint value, the duty factor of the present switch-on operation of the actively clocked switch and/or of a following switch-on operation is adjusted, wherein preferably the duty factor of the actively clocked switch is changed only every n-th switch-on operation, where n is greater than or equal to 2.

4. Method according to one of the preceding claims, in which the duty factor of the actively clocked switch is changed via the time at which the actively clocked switch is switched off, as controlled variable.

5. Method according to one of the preceding claims, in which the duty factor is adjusted by adaptively presetting a switch-off level of a measured variable which is representative of the lamp current, wherein, when the switch-off level is reached, the actively clocked switch is switched off.

6. Method according to one of the preceding claims, in which a sampled value of the lamp current, preferably measured for half the on duration of the actively clocked switch, is used as a measured actual value which is representative of the mean value of the lamp current.

7. Method according to one of Claims 1 to 5, in which the actual value which is representative of the mean value of the lamp current is determined by continuous measurement of the lamp current.

8. Method according to Claim 7, in which the continuously measured lamp current is compared with a reference value, and the actual value which is representative of the mean value is the duty factor of the comparison value over the on duration of the actively switched switch, wherein preferably the duty factor is determined on the basis of a bidirectional digital counter.

9. Method according to Claim 7 or 8, in which the reference value is dependent on a preset dimming value and/or the measured lamp voltage.

10. Circuit for power regulation of a gas discharge lamp, having a half-bridge circuit comprising two switches or a full-bridge circuit comprising four active switches, wherein the gas discharge lamp is connected in the bridge branch, wherein a control unit activates a bridge diagonal by virtue of it actively clocking a switch in the bridge diagonal, wherein a measured actual value which is representative of the mean value of the lamp current is fed back to the control unit and is compared with a reference value, **characterized in that** the lamp current (Iₗₐₘₚ) is preferably measured by means of a shunt (R1) only during the on duration of the actively clocked switch (S1, S2).

11. Circuit according to Claim 10, in which the control unit adjusts the duty factor of the present switch-on operation of the actively clocked switch and/or a following switch-on operation depending on a difference between the actual value and the setpoint value, wherein preferably the control unit changes the duty factor of the actively clocked switch only every n-th switch-on operation, wherein n is greater than or equal to 2.

12. Circuit according to either of Claims 10 and 11, in which the control unit changes the duty factor of the actively clocked switch via the time at which the actively clocked switch is switched off, as controlled variable.

13. Circuit according to one of Claims 10 to 12, in which the control unit adjusts the duty factor by adaptively presetting a switch-off level of a measured variable which is representative of the lamp current, wherein the control unit switches off the actively clocked switch when the switch-off level is reached.

14. Circuit according to one of Claims 10 to 13, in which the control unit, in addition to the closed-loop control of the operation of the gas discharge lamp, also actuates an intermediate circuit and receives feedback signals from the intermediate circuit, wherein the intermediate circuit voltage generates the DC bus voltage supplying the half-bridge circuit.

15. Circuit according to one of Claims 10 to 14, in which the control unit uses the level of the DC bus voltage supplying the half-bridge circuit as controlled variable for the power regulation as an alternative or in addition to the clocking of the actively clocked switch.

16. Circuit according to Claim 15, in which an active PFC circuit is provided for generating the bus voltage, wherein the control unit implements the level of the generated bus voltage by changing the clocking of a switch in the PFC circuit.

17. Circuit according to one of Claims 10 to 16, in which the control unit continuously measures the lamp current in order to determine the actual value which is representative of the mean value of the lamp current.

18. Circuit according to Claim 17, in which the control circuit has a comparator, which compares the continuously measured lamp current with a reference value, and the control circuit uses the duty factor of the output signal of the comparator as actual value which is representative of the mean value, wherein preferably the output signal of the comparator is supplied to a bidirectional digital counter in the control circuit.

19. Circuit according to one of Claims 10 to 18, which is in the form of an integrated circuit, preferably in the form of an ASIC.

20. Operating device for gas discharge lamps, having a circuit according to one of Claims 10 to 19.

21. Luminaire, having a gas discharge lamp and an operating device according to Claim 20.

22. Lighting system, having a plurality of luminaires, including at least one according to Claim 21, wherein the luminaires are preferably connected to one another and/or to a central control unit by one or more bus lines.

## Revendications

1. Procédé pour l'asservissement d'une lampe à décharge de gaz au moyen d'un circuit en demi-pont avec deux commutateurs ou d'un circuit en pont en H avec quatre commutateurs,
dans lequel la lampe à décharge de gaz (EL) est montée dans la branche de pont et une diagonale de pont est activée, dans laquelle un commutateur (S1, S2) est cadencé activement,
dans lequel une valeur réelle mesurée représentative de la valeur moyenne du courant de lampe (l_{Lamp}) est utilisée comme variable de rétroaction pour l'asservissement, la valeur réelle étant comparée à une valeur de référence (I_{AVG_SOLL}),
**caractérisé en ce que** le courant de lampe (l_{Lamp}) est mesuré de préférence au moyen d'un shunt (R1) uniquement pendant la durée de mise en circuit du commutateur cadencé activement (S1, S2).

2. Procédé selon la revendication 1,
dans lequel le commutateur cadencé activement (S1, S2) est mis en circuit au moment où le courant de la branche de pont détecté indirectement ou directement a décru jusqu'à zéro, de préférence au moment où il a atteint son point d'inflexion bas.

3. Procédé selon la revendication 1 ou 2,
dans lequel, en fonction d'une différence entre la valeur réelle et la valeur de consigne, le rapport cyclique du processus actuel de mise en circuit du commutateur cadencé activement et/ou d'un processus suivant de mise en circuit est ajusté, dans lequel de préférence le rapport cyclique du commutateur cadencé activement est modifié uniquement à chaque nième processus de mise en circuit, dans lequel n est supérieur ou égal à 2.

4. Procédé selon l'une des revendications précédentes,
dans lequel le rapport cyclique du commutateur cadencé activement est modifié, en tant que variable de commande, par l'intermédiaire de l'instant de la mise hors circuit du commutateur cadencé activement.

5. Procédé selon l'une des revendications précédentes,
dans lequel le rapport cyclique est ajusté en prédéterminant de manière adaptative un niveau de mise hors circuit d'une variable mesurée et représentative du courant de lampe,
dans lequel le commutateur cadencé activement est mis hors circuit lorsque le niveau de mise hors circuit est atteint.

6. Procédé selon l'une des revendications précédentes,
dans lequel une valeur d'échantillonnage du courant de lampe, de préférence mesurée à la moitié de la durée de mise en circuit du commutateur cadencé activement, est utilisée comme valeur réelle mesurée représentative de la valeur moyenne du courant de lampe.

7. Procédé selon l'une des revendications 1 à 5,
dans lequel la valeur réelle représentative de la valeur moyenne du courant de lampe est déterminée au moyen d'une mesure continue du courant de lampe.

8. Procédé selon la revendication 7,
dans lequel le courant de lampe mesuré de manière continue est comparé à une valeur de référence et la valeur réelle représentative de la valeur moyenne est le rapport cyclique de la valeur de comparaison pendant la durée de mise en circuit du commutateur commuté activement, dans lequel le rapport cyclique est de préférence déterminé à l'aide d'un compteur numérique bidirectionnel.

9. Procédé selon la revendication 7 ou 8,
dans lequel la valeur de référence dépend d'une valeur de gradation prédéterminée et/ou de la tension de lampe mesurée.

10. Circuit pour l'asservissement de puissance d'une lampe à décharge de gaz,
présentant un circuit en demi-pont avec deux commutateurs ou un circuit en pont en H avec quatre commutateurs actifs,
dans lequel la lampe à décharge de gaz est montée dans la branche de pont, dans lequel une unité de commande active une diagonale de pont en ce qu'elle cadence activement un commutateur de la diagonale de pont,
dans lequel une valeur réelle mesurée représentative de la valeur moyenne du courant de lampe est envoyée en rétroaction à l'unité de commande, ladite valeur réelle étant comparée à une valeur de référence,
**caractérisé en ce que** le courant de lampe (l_{Lamp}) est mesuré de préférence au moyen d'un shunt (R1) uniquement pendant la durée de mise en circuit du commutateur cadencé activement (S1, S2).

11. Circuit selon la revendication 10,
dans lequel l'unité de commande ajuste le rapport cyclique du processus actuel de mise en circuit du commutateur cadencé activement et/ou d'un processus suivant de mise en circuit en fonction d'une différence entre la valeur réelle et la valeur de consigne, dans lequel l'unité de commande modifie de préférence le rapport cyclique du commutateur cadencé activement uniquement à chaque nième processus de mise en circuit, n étant supérieur ou égal à 2.

12. Circuit selon l'une des revendications 10 à 11,
dans lequel l'unité de commande modifie le rapport cyclique du commutateur cadencé activement, en tant que variable de commande, par l'intermédiaire de l'instant de la mise hors circuit du commutateur cadencé activement.

13. Circuit selon l'une des revendications 10 à 12,
dans lequel l'unité de commande ajuste le rapport cyclique en prédéterminant de manière adaptative un niveau de mise hors circuit d'une variable mesurée et représentative du courant de lampe, dans lequel l'unité de commande met hors circuit le commutateur cadencé activement lorsque le niveau de mise hors circuit est atteint.

14. Circuit selon l'une des revendications 10 à 13,
dans lequel, en plus de l'asservissement du fonctionnement de la lampe à décharge de gaz, l'unité de commande commande également un circuit intermédiaire et reçoit des signaux de rétroaction du circuit intermédiaire, dans lequel la tension de circuit intermédiaire génère la tension continue de bus alimentant le circuit en demi-pont.

15. Circuit selon l'une des revendications 10 à 14,
dans lequel l'unité de commande utilise comme variable de commande de l'asservissement de puissance, alternativement ou en plus du cadencement du commutateur cadencé activement, le niveau de la tension continue de bus alimentant le circuit en demi-pont.

16. Circuit selon la revendication 15,
dans lequel un circuit actif de correction de facteur de puissance est prévu pour générer la tension de bus,
dans lequel l'unité de commande réalise le niveau de la tension de bus générée en modifiant le cadencement d'un commutateur du circuit de correction de facteur de puissance.

17. Circuit selon l'une des revendications 10 à 16,
dans lequel l'unité de commande mesure continuellement le courant de lampe pour déterminer la valeur réelle représentative de la valeur moyenne du courant de lampe.

18. Circuit selon la revendication 17,
dans lequel le circuit de commande présente un comparateur, qui compare le courant de lampe mesuré continuellement à une valeur de référence et le circuit de commande utilise le rapport cyclique du signal de sortie du comparateur comme valeur réelle représentative de la valeur moyenne, dans lequel le signal de sortie du comparateur est fourni de préférence à un compteur numérique bidirectionnel du circuit de commande.

19. Circuit selon l'une des revendications 10 à 18,
qui est configuré en tant que circuit intégré, de préférence en tant qu'ASIC.

20. Appareil d'alimentation pour lampes à décharge de gaz,
présentant un circuit selon l'une des revendications 10 à 19.

21. Luminaire, présentant une lampe à décharge de gaz et un appareil d'alimentation selon la revendication 20.

22. Système d'éclairage,
présentant plusieurs luminaires, dont au moins un selon la revendication 21, dans lequel les luminaires sont reliés entre eux ou à une unité de commande centrale de préférence au moyen d'une ou plusieurs lignes de bus.
